# EUROPÄISCHE PATENTSCHRIFT

(11) **EP 3 671 543 B1**
(45) Veröffentlichungstag und Bekanntmachung des Hinweises auf die Patenterteilung: **31.01.2024**
(21) Anmeldenummer: 19216431.7
(22) Anmeldetag: 16.12.2019
(51) Int. Cl.: G06V 10/145, G06V 10/94, G06V 40/16, G06V 40/19, G06V 40/40

(54) **ANORDNUNG ZUR ERFASSUNG VON BIOMETRISCHEN MERKMALEN EINES GESICHTS EINER PERSON**
APPARATUS FOR DETECTING BIOMETRIC FEATURES OF A FACE OF A PERSON
APPAREIL DE DÉTECTION DES CARACTÉRISTIQUES BIOMÉTRIQUES D'UN VISAGE D'UNE PERSONNE

(30) Priorität: 17.12.2018 DE 102018132475
(43) Veröffentlichungstag der Anmeldung: 24.06.2020
(73) Patentinhaber: Bundesdruckerei GmbH, 10969 Berlin (DE)
(72) Erfinder: Thater, Marcel, 30952 Ronnenberg (DE); Rabeler, Uwe, 30453 Hannover (DE); Wolf, Andreas, 13158 Berlin (DE); Maggioni, Chrisoph, 10961 Berlin (DE); Herrmann, Klaus, 30625 Hannover (DE); Hesse, Holger, 30655 Hannover (DE)
(74) Vertreter: Hentrich Patent- & Rechtsanwaltspartnerschaft mbB

(56) Entgegenhaltungen:
- DE-A1- 19 712 844
- DE-A1-102011 079 285
- DE-A1-102014 112 494
- DE-A1-102015 106 358
- US-A1- 2010 128 937
- MHOU KUDZAISHE ET AL: "Face spoof detection using light reflection in moderate to low lighting", 2017 2ND ASIA-PACIFIC CONFERENCE ON INTELLIGENT ROBOT SYSTEMS (ACIRS), IEEE, 16. Juni 2017 (2017-06-16), Seiten 47-52, XP033126331, DOI: 10.1109/ACIRS.2017.7986063 ISBN: 978-1-5090-6792-3 [gefunden am 2017-07-19]

## Beschreibung

Die Erfindung ist im beigefügten Anspruchssatz beschrieben.

Die Herausforderung bei Vorrichtungen zur Erfassung biometrischer Merkmale besteht darin, ein Bild zu erzeugen, welches möglichst frei von Abbildungsfehlern ist. Die biometrischen Merkmale des Gesichts einer Person sind deutlich zu erfassen. Dies spielt insbesondere eine Rolle im Bereich der automatisierten Gesichtserkennung bei Grenzkontrollen. Diese ABC-Systeme (engl. "automated border control") werden häufig an Flughäfen eingesetzt, um die Identität einer Person zweifelsfrei feststellen zu können (in Deutschland: "EasyPASS"). Dabei wird das Passbild einer Person automatisch mit der Person selbst bzw. mit einem von der Person erfassten Bild verglichen. Die auftretenden Abbildungsfehler können zu Falschrückweisungen bei der automatisierten Kontrolle führen, was eine wiederholte automatische, oder eine manuelle, d.h. menschliche Überprüfung beispielsweise durch einen Grenzpolizisten erfordert. Diese Praxis wird als zeit- und kostenintensiv eingestuft und stellt darüber hinaus ein Sicherheitsrisiko dar.

Um die Anzahl solcher manueller Prüffälle oder die Anzahl an automatischen Falschrückweisungen zu reduzieren, ist es bereits bei der Erstellung des Passbildes notwendig, dass dieses eine hohe Bildqualität aufweist. Auch der automatisierte Abgleich bei ABC-Systemen ist mit einer hohen Bildqualität durchzuführen. Vermehrt wird bei der Erstellung der Passbilder nicht mehr auf einen professionellen Fotografen, sondern auf Passbildautomaten zurückgegriffen, deren Bildqualität aber häufig schlecht ist aufgrund der Abbildungsfehler einerseits und aufgrund der fehlerhaften Haltung des Benutzers bzw. der häufig nicht optimalen Benutzerführung andererseits.

Die DE 197 12 844 A1 beschreibt ein Verfahren zur dreidimensionalen Identifizierung von Objekten, insbesondere zur Gesichtsidentifizierung. Dabei nimmt eine Kamera ein mittels einer digitalen Lichtverarbeitung kodiertes (strukturiert beleuchtetes) Objekt auf, um anhand der durch die strukturierte Beleuchtung/Kodierung erzeugte zusätzlichen Information ein dreidimensionales Bild zur dreidimensionalen Gesichtserkennung zu erstellen.

Die DE 10 2011 079285A1 beschreibt eine Vorrichtung zur Erfassung biometrischer Merkmale eines Gesichts mit einem vertikal verschiebbaren semitransparenten Spiegel zur optimalen Positionierung des Gesichts der abzubildenden Person gegenüber der Kamera.

In MHOU KUDZAISHE ET AL: "Face Spoof Detection Using Light Reflection in Moderate in Low Lighting" 2ND ASIA-PACIFIC CONFERENCE ON INTELLIGENT ROBOT SYSTEMS, IEEE, 16. Juni 2017, Seiten 47-52 beschäftigt sich damit, zu prüfen, inwieweit man bei der Gesichtserkennung reale Gesichter von Abbildern von Gesichtern unterscheiden kann. Dieser Artikel beschreibt hierfür einen Sensor zur Täuschungserkennung in Form einer Wärmebildkamera und beschäftigt sich mit verschiedenen Verfahren zur Täuschungserkennung, wie beispielsweise der Erkennung des Augenblinzelns, der Erkennung von dreidimensionalen Objekten durch strukturierte Beleuchtung, und der Analyse mittels der Auswertung von Verzerrungen, Abbildungsfehlern und Streumustern.

Eine Vorrichtung zur Erfassung biometrischer Merkmale einer Person ist beispielsweise aus der DE 10 2014 112 494 A1 bekannt. Die darin gezeigte Vorrichtung umfasst eine Kamera und zwei Spiegelanordnungen. Die erste Spiegelanordnung dient der Faltung eines zwischen dem zu erfassenden Gesicht der Person und der Kamera verlaufenden Strahlenganges. Die zweite Spiegelanordnung umfasst einen semitransparenten Spiegel, der Licht transmittiert zur Erfassung des Gesichts mittels der Kamera und der Licht reflektiert zur Spiegelung des Gesichts der Person.

Die US 2010 / 0 128 937 A1 beschreibt ein biometrisches System mit einer Vorrichtung zur Erfassung einer Vielzahl an Gesichtsbildern und Bildern der Iriden von Personen.

Eine Vorrichtung zur Erfassung biometrischer Merkmale des Gesichts einer Person gemäß dem Oberbegriff des Anspruchs 1 ist der nicht vorveröffentlichten DE 10 2017 115 136 A1 der Anmelderin zu entnehmen. Die darin beschriebene Vorrichtung hat sich bereits als sehr zuverlässig herausgestellt und gut bewährt.

Die DE 10 2015 106358 A1 beschreibt eine Bilderfassungsvorrichtung zur Aufnahme einer Mehrzahl von Referenzbildern zur Identifizierung einer Person. U

Eine solche Vorrichtung kann an einer räumlich beengten Grenzkontrollstelle, beispielsweise an Flughäfen, oder in engen Räumlichkeiten von Behörden Verwendung finden. Dennoch sollte gewährleistet sein, dass das Sicherheitspersonal einen möglichst weitreichenden Überblick über den Raum behalten kann, um etwaige Gefahren frühzeitig zu erkennen. Zudem variiert an Grenzkontrollstellen oder in Behördengebäuden die Beleuchtungssituation, so dass unterschiedliche Lichtverhältnisse bei der optischen Erfassung des Gesichts vorliegen können. Porträtfotos sind bei eingangs erwähnten Vorrichtungen entsprechend den Anforderungen der ISO 19794-5 (erste Edition, ausgegeben 2005) für Gesichtsbilder anzufertigen. Diese Norm fordert eine schattenfreie Ausleuchtung des Gesichts vor einem neutralen Hintergrund, der ebenfalls von Schatten freizuhalten ist. Eine spätere Freistellung des Gesichtsbilds mittels einer Software zur Bildbearbeitung ist nicht gestattet; wird also von der Norm untersagt.

Ausgehend von dem bekannten Stand der Technik ist es die Aufgabe der vorliegenden Erfindung, eine verbesserte Anordnung bereitzustellen, die weitestgehend schattenfreien Aufnahmen gewährleistet.

Die die Anordnung betreffende Aufgabe wird mit einer Anordnung gemäß dem Merkmalsbestand des Anspruchs 1 gelöst. Vorteilhafte Ausgestaltungen mit zweckmäßigen Weiterbildungen der Erfindung sind in den abhängigen Ansprüchen angegeben.

Die Vorrichtung, die vorzugsweise als eine Zugangskontrollvorrichtung mit optischer Erfassungsmöglichkeit biometrischer Merkmale eines Gesichts einer Person ausgestaltet ist, zeichnet sich insbesondere dadurch aus, dass die Beleuchtungseinrichtung eine erste und eine zweite vertikal bezüglich des zwischen dem optischen Spiegel und dem Gesicht der Person verlaufenden Strahlengangs versetzt angeordnete Beleuchtungseinheit umfasst, und dass die erste Beleuchtungseinheit in einer ersten Richtung vertikal versetzt angeordnet ist, und dass die zweite Beleuchtungseinheit in einer von der ersten Richtung abweichenden zweiten Richtung vertikal versetzt angeordnet ist. Der Versatz in vertikaler Richtung der ersten und der zweiten Beleuchtungseinheit sowie des digitalen Spiegels liegt vor bei einer für den bestimmungsgemäßen Gebrauch vorbereiteten Vorrichtung zur optischen Erfassung der biometrischen Merkmale.

Durch die vorliegende Ausgestaltung der Beleuchtungseinrichtung mit einer versetzt angeordneten ersten Beleuchtungseinheit und einer versetzt angeordneten zweiten Beleuchtungseinheit ist eine blendfreie, homogene Aufnahme eines Porträts ohne Hintergrundartefakte möglich. Mit der vorliegenden Erfindung lassen sich also Abbildungsfehler minimieren und Passbilder nach den Vorgaben der ISO 19794-5 (erste Edition, ausgegeben 2005) für Gesichtsbilder erstellen, wobei ein Mindestabstand zwischen der Kamera und dem Gesicht bzw. eine Mindestlänge des Strahlengangs von 120 Zentimetern (cm) eingehalten ist. Bevorzugt ist eine optische Weglänge zwischen der Kamera und dem Gesicht von zwischen 120 Zentimetern und 180 Zentimetern, weiterhin vorzugsweise zwischen 140 Zentimetern und 160 Zentimetern, insbesondere von ca. 150 Zentimetern.

Als biometrische Merkmale kommen beispielsweise die Farb- und/oder Formgebung der Iriden, der Augenabstand, die Stirnhöhe, die Form und Lage des Mundes, die Form und Lage der Nase und der Wangenknochen, die Anordnung der Blutgefäße etc. in Betracht.

Zur Vermeidung von Reflexionen, die die Qualität der Bilder negativ beeinflussen, hat es sich als vorteilhaft erwiesen, wenn die Beleuchtungseinheiten aus mehreren durch die Auswerte- und/oder Steuereinheit einzeln oder gemeinsam ansteuerbaren Beleuchtungselementen gebildet sind. Neben einem Einschalten und Ausschalten der Beleuchtungselemente ist zusätzlich die Möglichkeit eröffnet, dass die Beleuchtungselemente ausgebildet sind, gedimmt zu werden. Vorzugsweise sind die Beleuchtungselemente als flache strukturierte Lichtleiter mit LEDs oder mit LED-Beleuchtung gebildet. Die Beleuchtung bzw. Ausleuchtung des Gesichts der Person kann durch die einzelne Ansteuerung der Beleuchtungselemente sowie durch die Strukturierung der einzelnen Lichtleitersegmente sehr exakt erfolgen, so dass Reflexe oder Fehlabbildungen, Über- oder Unterbelichtung etc. verhindert werden. Auch bei Brillenträgern kann durch die einzelnen Beleuchtungselemente die Reflexionsbildung an den Brillengläsern reduziert oder sogar gänzlich verhindert werden, sodass die Augen der abzulichtenden Person hinter den Brillengläsern bei der Aufnahme erkennbar sind.

In diesem Zusammenhang ist außerdem die Möglichkeit gegeben, dass die erste Beleuchtungseinheit und/oder die zweite Beleuchtungseinheit geneigt bezüglich des zwischen dem optischen Spiegel und dem Gesicht der Person verlaufenden Strahlengangs ausgerichtet ist/sind. In einer vorteilhaften Weitergestaltung kann die Neigung der Beleuchtungseinheiten bezüglich einer Gehäusefront automatisiert oder manuell verändert werden, so dass Schatten im Gesicht der Person erzeugbar sind, um zu prüfen, ob tatsächlich ein dreidimensionaler Kopf von der Kamera erfasst wird. Eine Veränderung der Neigung der Beleuchtungseinrichtung bildet damit ein zuverlässiges Mittel zur Täuschungserkennung (PAD = "presentation attack detection").

Wenn eine Überwachung des Erfassungsvorgangs des Gesichts der Person nicht durch geschultes Personal erfolgen kann, so hat sich der Einsatz solcher Mittel zur Täuschungserkennung bewährt. Es ist deshalb sinnvoll, wenn die Vorrichtung außerdem einen Sensor zur Täuschungserkennung umfasst.

Ein solcher Sensor kann beispielsweise als eine Wärmebildkamera gebildet sein, die vorzugsweise ausgebildet ist, ein Wärmebild eines Gesichtsbereichs der Person aufzunehmen, wobei ein Prozessor oder die Auswerte- und/oder Steuereinheit ausgebildet ist, eine örtliche Wärmeinhomogenität in einem vorbestimmten Erfassungsbereich des Wärmebilds zu detektieren. Alternativ oder ergänzend kann der Sensor als eine Nahinfrarot-Kamera (NIR-Kamera) gebildet sein, um die "presentation attack detection" durchzuführen. Anhand eines durch eine NIR-Kamera aufgenommenen NIR-Bildes kann unterschieden werden, ob das Bild eine reale Person darstellt oder lediglich ein auf einem Wiedergabegerät (z.B. einem Smartphone oder einem Tablet) dargestelltes Abbild einer Person zeigt.

Im Rahmen der Erfindung ist es von Vorteil, wenn eine Übersichtskamera mit einer zweiten Brennweite vorgesehen ist, wobei die Länge eines zweiten Strahlengangs zwischen der Übersichtskamera und dem Gesicht der Person kleiner ist als die Länge des Strahlengangs zwischen der Kamera und dem Gesicht der Person. Während die Länge des ersten Strahlenganges zwischen dem Gesicht und der Kamera ca. 150 Zentimeter beträgt, liegt die Länge des zweiten Strahlengangs zur Übersichtskamera vorzugsweise in einem Bereich zwischen ca. 90 Zentimetern bis ca. 130 Zentimetern. Mit Hilfe der Übersichtskamera lässt sich ein Übersichtsbild erstellen und es können die Position und die Haltung des Kopfes der Person überprüft werden. Hierzu ist die Übersichtskamera vorzugsweise ebenfalls mittels einer Kommunikationsverbindung mit der Auswerte- und/oder Steuereinheit verbunden.

Weil der zweite Strahlengang bzw. die zweite optische Weglänge vom Gesicht zur Übersichtskamera kürzer ist als die Länge des Strahlengangs zwischen dem Gesicht und der Kamera, lässt sich durch die unterschiedlichen Abbildungseigenschaften des durch die Übersichtskamera und des durch die Kamera aufgenommenen Bildes eine Tiefeninformation ermitteln. Mit dieser Tiefeninformation und ggfs. unter Zuhilfenahme der Auswerte- und/oder Steuereinheit lässt sich dann eine dreidimensionale Information über das Gesicht bzw. den Kopf generieren. Anhand dieser dreidimensionalen Information kann im Rahmen der Täuschungserkennung festgestellt werden, ob das abzubildende Objekt dreidimensional oder zweidimensional ist; ob es sich also lediglich um ein Abbild einer Person und damit um keine "echte" Person handelt.

Mit den dreidimensionalen Daten kann aber auch eine Überprüfung des Abstandes des Kopfes von der Kamera bzw. der Übersichtskamera erfolgen. Die erste Brennweite der Kamera und die zweite Brennweite der Übersichtskamera können dabei vorzugsweise gleich oder unterschiedlich sein. Durch den Einsatz unterschiedlicher Brennweiten oder mittels unterschiedlicher Schärfe-Einstellungen der Kamera können unterschiedliche Referenzbilder mit unterschiedlichen Bildaufnahmeszenarien zur Personenidentifikation erzeugt werden.

Es hat sich als vorteilhaft erwiesen, wenn der optische Spiegel zumindest teildurchlässig und derart angeordnet ist, dass das durch den optischen Spiegel reflektierte Licht auf die Kamera und das durch den optischen Spiegel transmittierte Licht auf die Übersichtskamera gelenkt ist. Der optische Spiegel kann als semitransparenter Spiegel oder alternativ auch als Strahlteiler gebildet sein. Ist der optische Spiegel als Strahlteiler gebildet, so ist es insbesondere vorteilhaft ist, wenn der optische Spiegel als 50/50 Strahlteiler gebildet ist, bei welchem ein Anteil von 50 Prozent der Intensität des auftreffenden Lichts reflektiert und ein komplementärer Anteil von ebenfalls 50 Prozent der Intensität des auftreffenden Lichts durchgelassen wird. Alternativ kann der Strahlteiler auch Licht in einem bestimmten Wellenlängenbereich transmittieren und Licht eines anderen Wellenlängenbereichs reflektieren; oder die Strahlteilung erfolgt anhand der entsprechenden Polarisation des Lichtes. Durch eine Anordnung der Übersichtskamera auf einer der Gehäusefront abgewandten Seite des teildurchlässigen Spiegels kann außerdem ein kompakter Aufbau realisiert werden (aus der Sicht eines Benutzers ist dann die Übersichtskamera also hinter dem und auf Höhe des optischen Spiegels angeordnet). Darüber hinaus sind die Justage und die Höheneinstellung des Gehäuses und/oder der Kamera inkl. der Übersichtskamera vereinfacht. Außerdem ist es bevorzugt, wenn im Gehäuse eine optische Brillendetektionseinheit vorgesehen ist. Brillen erzeugen bei Abbildungen häufig Reflexe, die die Qualität der Abbildung verschlechtern. Vorzugsweise umfasst die Brillendetektionseinheit eine UV-Lichtquelle zur Aussendung von Ultraviolettstrahlung in Richtung der Person und einen UV-Detektor zur Detektion von von der Person reflektierter bzw. gestreuter Ultraviolettstrahlung umfasst. In der Regel reflektieren (teilweise auch absorbieren) Brillengläser Licht im ultravioletten Bereich bis ca. 350 Nanometer (nm). Erst Licht mit größerer Wellenlänge und insbesondere sichtbares Licht wird von den Brillengläsern transmittiert. Diese Erkenntnis wird genutzt, um anhand der charakteristischen Remission des UV-Lichts von Brillengläsern festzustellen, ob die Person eine Brille trägt oder nicht. Wird eine Brille detektiert, so kann dann durch Anpassung der Beleuchtungseinheit die Entstehung von Reflexen verhindert werden. Alternativ kann z.B. über den als Bedieneinheit gebildeten digitalen Spiegel auch ein grafischer oder akustischer Hinweis ausgegeben werden, der die Person veranlasst, die Brille für den Erstellungsprozess des Bildes oder für den Identifikationsprozess abzunehmen. Die Brillendetektionseinheit kann alternativ oder ergänzend eine Time-of-flight-Kamera wie eine MS-Kinect^{®}-Kamera umfassen. Beispielsweise können hierbei mit Hilfe der Time-of-flight-Kamera die für Brillengläser vordefinierten Charakteristika im Tiefenprofil des Gesichtsbildes bestimmt oder erfasst werden. Solche Charakteristika können dabei insbesondere die beiden durch die Brillengläser hervorgerufenen nahezu ebenen Flächen beidseits der Nase sein.

Um eine zentrierte und vollständige Abbildung des Gesichts auch bei unterschiedlich großen Personen zu erzeugen, ist es in einer weiteren von der beanspruchten Erfindung nicht abgedeckten

Ausführungsform vorgesehen, dass das Gehäuse und/oder die Kamera mit dem optischen Spiegel höhenverstellbar sind. Dadurch lässt sich sicherstellen, dass das Gesicht zentriert abgebildet wird. Es ist es zur einfacheren Justage und zur Vermeidung von optischen Fehleinstellungen bevorzugt, wenn das Gehäuse beispielsweise an einer Stange oder Wand horizontal und vertikal verstellbar angebracht ist.

Nach einer weiteren Ausgestaltung bildet der digitale Spiegel eine Bedieneinheit, die insbesondere als ein Touchscreen gestaltet ist, auf dem das durch die Kamera erfasste Bild anzeigbar ist. Somit kann die Person oder der Benutzer das durch die Kamera zu erfassende Bild am digitalen Spiegel, mithin am Display bzw. am Touchscreen, in Echtzeit betrachten, bevor die Aufzeichnung des Fotos oder des Passbildes erfolgt. Die vertikale Versetzung des digitalen Spiegels nach unten oder nach oben zwingt die abzulichtende Person zu einer Kopfneigung, was Reflexionen durch Brillengläser im Gesichtsbild vorbeugt, insbesondere im Zusammenwirken mit den vertikal versetzt angeordneten Beleuchtungseinheiten der Beleuchtungseinrichtung.

Alternativ oder ergänzend ist auf dem digitalen Spiegel ein Blickschutzfilter angeordnet. Blickschutzfilter haben den Vorteil, dass das Display des digitalen Spiegels nur unter vorgebbaren Blickwinkeln möglich ist (z.B. unter Blickwinkeln von -30 Grad bis +30 Grad). Hierdurch wird die Person gezwungen, einen vorgegebenen Blickwinkel, eine vorgegebene Position und damit einen vorgegebenen Abstand zur Kamera einzunehmen. Auch durch den Einsatz eines Blickschutzfilters wird die für ein qualitativ hochwertiges Passbild bevorzugte optische Weglänge zwischen der Kamera und dem Gesicht der Person erzwungen. Eine bevorzugte Ausgestaltung des Blickschutzfilters sieht den Einsatz einer oder mehrerer Schichten einer Mehrzahl von Prismenlinsen vor. Jede Prismenlinse ist ausgestaltet, das Licht einzelner Bildpunkte des Displays zu bündeln und gerichtet auszusenden. Nur wenn sich die Person an der für die Erfassung der biometrischen Merkmale und/oder des Gesichtsbilds gewünschten Position gegenüber und/oder im gewünschten Abstand von der Kamera befindet, kann sie das von den Prismenlinsen ausgesendete Licht sehen. In diesem Falle können die Prismenlinsen starr angeordnet sein. Alternativ oder ergänzend sind die Prismenlinsen aber beweglich, insbesondere gesondert, ansteuerbar, so dass jede Prismenlinse das Licht einzelner Bildpunkte des Displays bündelt und gezielt dem linken oder dem rechten Auge der Person zusendet. Dabei wird sich die Person im Display nur dann wiedererkennen oder nur dann etwas im Display sehen können, wenn sie sich auf der gewünschten Position gegenüber und/oder im gewünschten Abstand von der Kamera befindet. Um bei diesen beweglichen Prismenlinsen auswerten zu können, an welcher Stelle der Szene sich der Kopf und/oder die Augen der abzulichtenden Person befinden, hat es sich als vorteilhaft erwiesen, wenn eine Übersichtskamera vorhanden ist, die derart ausgestaltet ist, die Kopf- und/oder die Augenposition der Person zu erfassen. Die Übersichtskamera übernimmt dabei vorzugsweise zusätzlich eine Trackingfunktion für die Lage des Kopfes und/oder der Augen und ermöglicht dadurch das zielgerichtete Zusenden der Bildpunkte mittels der Prismenlinsen, was nur dann erfolgreich funktioniert, wenn sich die Person an der gewünschten Position gegenüber und/oder im gewünschten Abstand von der Kamera befindet. Befindet sich die Person nicht an der gewünschten Position oder nicht im gewünschten Abstand, so senden die Prismenlinsen kein Licht in Richtung der Augen der Person aus, womit diese nichts am Display oder dem digitalen Spiegel erkennen kann.

Der Blickschutzfilter aus Prismenlinsen gewährleistet vorzugsweise, dass sich der Kopf der Person sowohl in horizontaler als auch vertikaler Richtung in der gewünschten Weise gegenüber der Kamera angeordnet ist, um die biometrischen Merkmale und/oder das Gesichtsbild zu erfassen.

Die Anordnung zeichnet sich insbesondere dadurch aus, dass die Rückwand ausgebildet ist, umgeschaltet zu werden zwischen einer Opak-Konfiguration, in welcher ein zumindest aus einem vorgegebenen Spektralbereich stammendes, auf eine Rückseite der Rückwand auftreffendes Licht absorbiert oder von der Rückseite reflektiert wird, und einer Transmissions-Konfiguration, in welcher auf die Rückseite der Rückwand auftreffendes Licht zu einer Vorderseite der Rückwand transmittiert wird.

Damit besteht also die Möglichkeit, die den Bildhintergrund für die Aufnahme bildende Rückwand transparent zu schalten, so dass das Sicherheitspersonal in dieser Konfiguration sehen kann, was sich hinter der Rückwand befindet, womit sich diese Rückwand bzw. das Aufnahmesystem hervorragend an Grenzkontrollstellen bzw. an Enrolment- und Self-Enrolment-Systemen bspw. an Flughäfen einsetzen lässt.

Neben der Möglichkeit des Einsatzes eines thermochromen Materials für die Rückwand, das eine Lichtabsorption in Abhängigkeit von der Temperatur ändert, besteht zudem die Möglichkeit, dass die Rückwand elektrosensitiv zwischen der Opak-Konfiguration und der Transmission-Konfiguration, vorzugsweise auch auf dazwischenliegende Zwischenkonfigurationen, umgeschaltet werden kann.

Eine flexible Formgebung der Rückwand lässt sich insbesondere durch eine flexible, elektrisch schaltbare, d.h. elektrosensitive Folie realisieren, die aus einem Kunststoff, insbesondere einem Polyethylenterephtalat (PET), gebildet ist, in welchen eine Vielzahl von über die Folie verteilten Flüssigkristallen einlaminiert ist, die ausgestaltet sind, ihre Ausrichtung beim Anlegen einer elektrischen Spannung zu verändern. Typischerweise ist das Anlegen der Spannung dazu genutzt, um die Rückwand in die Transmission-Konfiguration zu verstellen, so dass beim Abnehmen der Spannung die Opak-Konfiguration eingenommen wird. Das bedeutet, dass die Rückwand im spannungslosen Zustand also opak und damit undurchsichtig für das menschliche Auge ist.

In diesem Zusammenhang hat es sich zudem als vorteilhaft erwiesen, wenn die Rückwand mehrschichtig mit einem Polymer-Flüssigkristallfilm mit Flüssigkristallmolekülen gebildet ist, und wenn die im Flüssigkristallfilm angeordneten Flüssigkristallmoleküle ausgestaltet sind, beim Anlegen einer Gleichspannung ihre Ausrichtung zu ändern, um die Rückwand zwischen der Opak-Konfiguration und der Transmission-Konfiguration elektrisch umzuschalten. Die Flüssigkristallmoleküle bilden Streuzentren für sichtbares Licht, wobei auch hier die Möglichkeit besteht, dass beim Anlegen der Gleichspannung die Ausrichtung der Flüssigkristallmoleküle derart erfolgt, dass die Rückwand für das menschliche Auge transparent und damit durchsichtig erscheint.

Eine alternative Ausgestaltung nutzt den Polarisationseffekt aus, durch welchen durch ein geeignetes Polfilter dazu führt, dass Licht durch das Polfilter dringen kann oder nicht, und zwar abhängig davon, wie der Polarisationswinkel des Flüssigkristalls aufgrund einer angelegten Spannung gewählt ist. Hierzu ist ein erstes Polfilter auf eine Schicht aus Flüssigkristallen aufgebracht, welche ihrerseits zwischen zwei Elektroden eingefasst ist. Auf der dem ersten Polfilter gegenüberliegenden Seite der Flüssigkristallschicht ist ein zweites Polfilter aufgebracht. Der Flüssigkristall ist ausgestaltet, die Polarisationsebene abhängig von der an den Elektroden angelegten Spannung zu verdrehen. Das durch das erste Polfilter polarisierte Licht kann also dann abhängig von der Spannung das zweite Polfilter passieren (Transmissionskonfiguration) oder nicht (Opak-Konfiguration).

Um zu verhindern, dass auf der Rückwand Schatten entstehen oder um einen schattenfreien Bildhintergrund für die Aufnahme zu gewährleisten, ist erfindungsgemäß vorgesehen, dass die Rückwand einen die Vorderseite der Rückwand bildenden Lichtleiter umfasst, der ausgebildet ist, in ihn eingekoppeltes Licht über die Vorderseite der Rückwand auszukoppeln. Hinter dem Lichtleiter liegende Schichten der Rückwand können dabei als Reflektoren wirken, so dass gewährleistet ist, dass in den Lichtleiter der Rückwand eingekoppeltes Licht überwiegend - vorzugsweise aber vollständig - über die Vorderseite, mithin in Richtung der Kamera ausgekoppelt wird.

In diesem Zusammenhang ist zudem die Möglichkeit eröffnet, dass in den Lichtleiter eine Vielzahl von Partikeln und/oder Störstellen eingebracht ist, die derart ausgebildet sind, um auf sie auftreffendes Licht zu streuen. Durch diese Ausgestaltung lässt sich ein diffuses Licht über die Vorderseite der Rückwand auskoppeln, so dass keine Blendeffekte an der Rückwand auftreten, die in der späteren Aufnahme der Kamera sichtbar werden.

Es ist von Vorteil, wenn zum Einkoppeln von Licht in den Lichtleiter mindestens ein Leuchtelement, insbesondere eine Leuchtdiode, vorhanden ist, das vorzugsweise derart gegenüber dem Lichtleiter positioniert ist, dass ein von ihm abgestrahltes Licht nahezu vollständig oder vollständig in den Lichtleiter eingekoppelt wird. Das Leuchtelement kann vorzugsweise ebenfalls mittels der Auswerte- und/oder Steuereinheit angesteuert werden.

Im Folgenden wird die Erfindung an in der Zeichnung dargestellten Ausführungsbeispielen näher erläutert; es zeigen:
- Fig. 1: eine Anordnung mit einer Vorrichtung zur Erfassung biometrischer Merkmale eines Gesichts einer Person anhand einer schematischen Seitenansicht; und
- Fig. 2: eine Frontansicht auf die Anordnung mit der Vorrichtung nach Fig. 1 ohne die Rückwand.

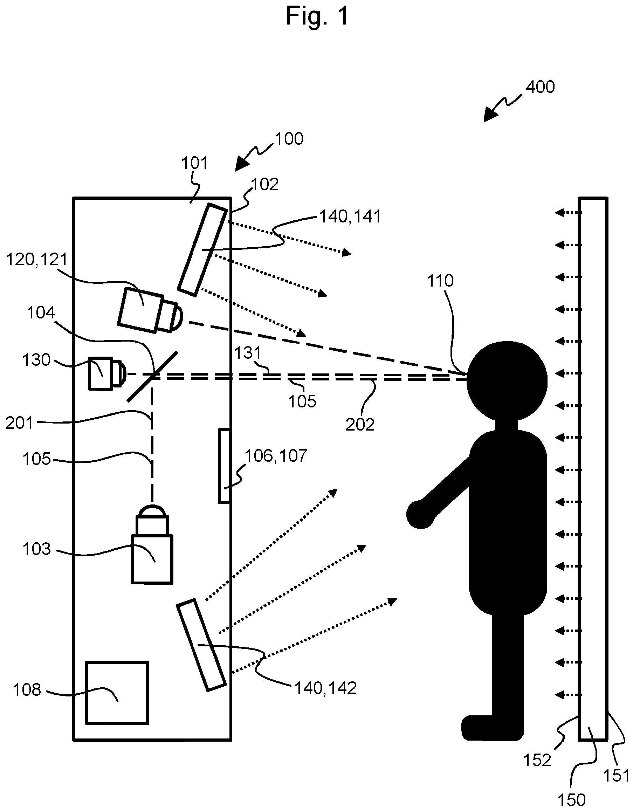

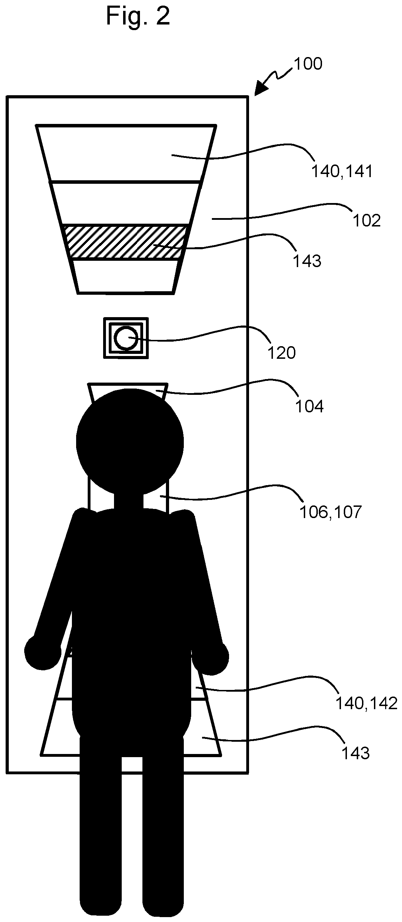

Fig. 1 und Fig. 2 zeigen exemplarisch eine Anordnung 400 mit einer Vorrichtung 100 zur Erfassung biometrischer Merkmale eines Gesichts 110 einer Person. Die Vorrichtung 100 besitzt ein Gehäuse 101, welches eine der Person zugewandte Gehäusefront 102 aufweist. In dem Gehäuse 101 ist eine Kamera 103 zur Erfassung der biometrischen Merkmale des Gesichts 110 der Person angeordnet, die auf einen optischen Spiegel 104 gerichtet ist. Die Blickrichtung der Kamera 103 ist damit also im Wesentlichen parallel zu einer durch die Gehäusefront 102 definierten Ebene orientiert. Der ebenfalls im Gehäuse 101 angeordnete optische Spiegel 104 dient der Faltung eines zwischen dem Gesicht 110 der Person und der Kamera 103 verlaufenden, strichliert dargestellten Strahlengangs 105. Hierzu lenkt der optische Spiegel 104 das durch eine Gehäuseöffnung bzw. durch einen transparenten Abschnitt in der Gehäusefront 102 einfallende Licht auf die Kamera 103. Er ist im gezeigten Ausführungsbeispiel im Wesentlichen um 45 Grad gegenüber der durch die Gehäusefront 102 vorgegebene Ebene geneigt angeordnet.

Außerdem ist ein digitaler Spiegel 106 vorhanden, der ausgebildet ist, das von der Kamera 103 erfasste Bild anzuzeigen. Um den Benutzer zu einer zumindest leicht geneigten Haltung des Kopfes zu zwingen, ist der digitale Spiegel 106 vertikal nach unten versetzt bezüglich des Strahlenganges 105 angeordnet.

Der digitale Spiegel 106 ist vorzugsweise als eine Bedieneinheit 107 ausgestaltet, die einen Touchscreen bzw. ein Touchpanel aufweisen kann und vorzugsweise mit einer Auswerte- und/oder Steuereinheit 108 in Form eines Computers verbunden ist. Alternativ weist die Bedieneinheit 107 auch einen eigenständigen Prozessor (bspw. einen Mikroprozessor) auf, vorzugsweise mit einem in dessen Speicher abgelegten und ausführbaren Echtzeitbetriebssystem (RTOS=real-time operating system) und einer oder mehrerer Anwendungen (Applications) zur Gesichtsbilderfassung. Zwischen der Bedieneinheit 107 und dem Computer ist im Betrieb der Vorrichtung 100 eine Kommunikationsverbindung wirksam, welche drahtgebunden oder drahtlos (bspw. Bluetooth, WLAN, NFC, etc.) gebildet sein kann. Die Auswerte- und/oder Steuereinheit 108 steht weiterhin in einer drahtgebundenen oder drahtlosen Kommunikationsverbindung mit der Kamera 103. Somit können die von der Kamera 103 erfassten Bilder, vorzugsweise in Echtzeit, mit Hilfe des Computers auf dem digitalen Spiegel 106, mithin auf dem Touchscreen ausgegeben werden.

Der Abstand 201 zwischen der Kamera 103 und dem Spiegel 104 sowie der Abstand 202 zwischen dem optischen Spiegel 104 und dem Gesicht 110 sind dabei konstant zu halten. Deshalb ist wird bei einer vertikalen, d.h. entlang einer Parallelen zu der Gehäusefront 102 orientierten, Verstellung des Spiegels 104 zugleich die Kamera 103 vertikal um denselben Betrag verstellt. Hierzu kann eine vertikale Hubeinrichtung zur Verstellung der Kamera 103 und des optischen Spiegels 104 vorgesehen sein. In einer anderen von der beanspruchten Erfindung nicht abgedeckten Ausführungsform kann auch eine

Hubeinrichtung zur vertikalen Verstellung des gesamten Gehäuses 101 vorgesehen sein, um den Spiegel 104 auf die Höhe des Gesichts 110 der zu erfassenden Person zu verstellen.

Die Vorrichtung 100 weist zudem eine Beleuchtungseinrichtung 140 auf, die sich vorliegend in eine erste Beleuchtungseinheit 141 und in eine zweite Beleuchtungseinheit 142 untergliedert. Es ist aber die Möglichkeit eröffnet, dass mehr als zwei der Beleuchtungseinheiten 141, 142 vorhanden sind. Um eine schattenfreie Ausleuchtung des Gesichts 110 und bei Brillenträgern eine reflexionsfreie Aufnahme zu gewährleisten, ist die erste Beleuchtungseinheit 141 in einer ersten Richtung, insbesondere nach oben, vertikal versetzt bezüglich dem Strahlengang 105 angeordnet, wobei die zweite Beleuchtungseinheit 142 in einer von der ersten Richtung abweichenden zweiten Richtung, insbesondere nach unten, vertikal versetzt bezüglich dem Strahlengang 105 angeordnet ist. Die erste Beleuchtungseinheit 141 ist insbesondere vollständig oberhalb des optischen Spiegels 104 angeordnet. Die zweite Beleuchtungseinheit 142 ist insbesondere vollständig unterhalb des optischen Spiegels 104 angeordnet. Das von den Beleuchtungseinheiten 141, 142 emittierte Licht ist in der Figur durch punktierte Pfeile illustriert.

Wie sich aus Fig. 2 entnehmen lässt, ist vorliegend jede der Beleuchtungseinheiten 141, 142 aus mehreren durch den Computer einzeln ansteuerbaren Beleuchtungselementen 143 gebildet. Dabei sind die Beleuchtungselemente 143 nicht nur ein- und ausschaltbar, sondern auch dimmbar, so dass sie an die gegebene Beleuchtungssituation anpassbar sind. Vorliegend sind vier der Beleuchtungselemente 143 an jeder Beleuchtungseinheit 141, 142 vorhanden. Eine andere Anzahl ist möglich. Zudem ist zu erkennen, dass nicht alle Beleuchtungselemente 143 eingeschaltet sein müssen. Die ausgeschalteten Beleuchtungselemente 143 sind schraffiert dargestellt. Die Beleuchtungselemente 143 lassen sich in Abhängigkeit von der Größe der Person oder in Abhängigkeit von der horizontal einstellbaren Lage des optischen Spiegels 104 und damit in Abhängigkeit von der Lage der Kamera 103 ein- bzw. ausschalten. Die Steuerung erfolgt mittels der Auswerte- und/oder Steuereinheit 108. Durch die individuelle Ansteuerbarkeit der Beleuchtungselemente lassen sich die Empfehlungen der erwähnten ISO 19794-5 realisieren. Außerdem lassen sich die Beleuchtungselemente 143 für eine "presentation attack detection" nutzen, wobei sich durch eine geeignete Schaltung der Beleuchtungselemente 143 Schattenbilder auf dem Gesicht 110 provozieren lassen, so dass ermittelt werden kann, ob es sich bei der Person tatsächlich um ein dreidimensionales "Objekt" handelt.

Die gezeigte Vorrichtung 100 weist außerdem eine Übersichtskamera 130 zur Aufzeichnung eines oder mehrerer Übersichtsbilder auf, welche eine zweite Brennweite aufweist (Fig. 1). Die Länge eines zweiten Strahlengangs 131, d.h. einer zweiten optischen Weglänge zwischen der Übersichtskamera 130 und dem Gesicht 110 der Person ist dabei kleiner als die Länge des Strahlengangs 105 zwischen der Kamera 103 und dem Gesicht 110 der Person. Das Übersichtsbild lässt sich durch eine Gehäuseöffnung bzw. durch einen transparenten Abschnitt in der Gehäusefront 102 aufnehmen. Die Übersichtskamera 130 ist vorliegend auf der der Gehäusefront 102 abgewandten Seite des optischen Spiegels 104, bzw. hinter diesem angeordnet ist. Der optische Spiegel 104 ist aus diesem Grund zumindest teildurchlässig oder semitransparent gebildet und derart angeordnet, dass das durch den optischen Spiegel 104 reflektierte Licht auf die Kamera 103 und das durch den optischen Spiegel 104 transmittierte Licht auf die Übersichtskamera 130 gelenkt ist. Eine solche Anordnung der Übersichtskamera 130 führt zu einer sehr kompakten Vorrichtung 100. Es besteht jedoch die Möglichkeit, die Übersichtskamera 130 im Gehäuse 101 auf der der Kamera 103 abgewandten Seite, mithin oberhalb, des optischen Spiegels 104 anzuordnen, womit sich das Gehäuse 101 "schlank" halten lässt.

Anhand des mit der Übersichtskamera 130 erstellten Übersichtsbildes kann beispielsweise in der Auswerte- und/oder Steuereinheit 108 die Position und die Lage des Gesichts 110 der Person bestimmt werden. Hierzu steht die Übersichtskamera 130 in einer drahtgebundenen oder drahtlosen Kommunikationsverbindung mit der Auswerte- und/oder Steuereinheit 108. Anhand des Übersichtsbildes kann die Höhenlage des optischen Spiegels 104 angepasst werden, um den "Blick" der Kamera 103 - über den optischen Spiegel 104 - auf das Gesicht 110 der Person zu richten. Vorzugsweise werden anhand des Übersichtsbildes in der Auswerte- und/oder Steuereinheit 108 die Konturen des Gesichts 110 durch eine Randerkennung und/oder eine Farberkennung ermittelt. Nur wenn das Gesicht 110 vollständig abgebildet und zentriert ist, wird der nächste Schritt der Aufnahme eines Gesichtsbilds durch die Kamera 103 durchgeführt.

Mit Hilfe des Übersichtsbilds lässt sich aber auch der Abstand des Gesichts 110 der Person von der Übersichtskamera 130 und damit auch von der Kamera 103 bestimmen. Beispielsweise kann hierzu eine Triangulation genutzt werden, denn wenn mindestens zwei Referenzpunkte durch die Übersichtskamera 130 aufgenommen werden, deren jeweiliger Abstand zur Übersichtskamera 130 bekannt ist, so lässt sich daraus mittels Triangulation der Abstand des Gesichts 110 zur Übersichtskamera 130 ableiten. Aber auch eine als eine Time-of-Flight-Kamera gebildete Übersichtskamera 130 kann zur Abstandsbestimmung eingesetzt werden. Insgesamt wird dadurch gewährleistet, dass das Gesicht 110 der Person nicht zu nahe am optischen Spiegel 104 positioniert ist, was zu einem verfälschten Gesichtsbild führen könnte.

Die Abstandsmessung kann zur Kontrolle auch nach der Aufnahme des Gesichtsbildes 110 durch die Kamera 103 erfolgen. Hierbei kann ausgenutzt werden, dass aufgrund der unterschiedlichen Längen der Strahlengänge 105, 131 bzw. der optischen Weglänge zwischen dem Gesicht 110 und der Übersichtskamera 130 und dem Gesicht 110 und der Kamera 103 die Abbildungseigenschaften der jeweiligen Bilder unterschiedlich sind, so dass anhand der unterschiedlichen Abbildungseigenschaften eine Tiefeninformation generiert werden kann.

Zudem lässt sich feststellen, ob ein lebender Kopf abgebildet wird. Dies kann erreicht werden, indem mehrere Übersichtsbilder in Serie und/oder mehrere Gesichtsbilder in Serie aufgenommen werden, um zu überprüfen, ob unterschiedliche Gesichtsausdrücke und/oder unterschiedliche Augenpositionen abgebildet wurden. Dies erlaubt den Rückschluss auf einen lebenden Kopf.

Die Vorrichtung 100 kann als eine Kabine, bspw. in Form eines Selbstbedienungskiosks, ausgestaltet sein. Dieser bildet dann eine erfindungsgemäße Anordnung 400 mit einer Rückwand 150. Um qualitativ hochwertige Gesichtsbilder zur Verwendung in einem Pass erzeugen zu können, ist die der Gehäusefront 102 zugewandte Oberfläche der Rückwand 150 vorzugsweise einfarbig in einer neutralen Farbe gehalten. Alternativ kann die Anordnung 400 auch als ein Terminal zur Erfassung von biometrischen Daten einer Person ausgestaltet sein. Dieses Terminal kann eine Sendeeinheit und eine Empfangseinheit umfassen. Das erfasste Gesichtsbild lässt sich mittels der Sendeeinheit zu einer Behörde senden, wo ein Prüfmodul die Echtheit der biometrischen Daten im Gesichtsbild überprüft und wo ein Komparator die Daten mit in einer Datenbank abgelegten Werten auf Übereinstimmung abgleicht. Das Prüf- und/oder Komparatorergebnis kann dann an die Empfangseinheit des Terminals zurückgesendet werden. Somit lässt sich die Vorrichtung 100 nicht nur zur Erzeugung hochwertiger Passbilder sondern auch zum Identitätsabgleich nutzen.

Alternativ oder zusätzlich kann die insbesondere als Zugangskontrollvorrichtung ausgebildete Vorrichtung 100 auch derart ausgestaltet sein, dass diese eine Leseeinheit aufweist. Die Leseeinheit ist ausgebildet, die in einem Chip eines Personalausweises, eines Passes oder eines Dienstausweises, insbesondere kryptographisch abgesichert gespeicherten Daten auszulesen. Das Auslesen kann berührungslos, beispielsweise mittels Nahfeldkommunikation (NFC) erfolgen. Die auszulesenden Daten umfassen vorzugsweise Daten, insbesondere biometrische Daten zum Passbild der Person, so dass eine in der Vorrichtung 100 vorhandene Komparatoreinheit die optisch erfassten biometrischen Merkmale mit den aus dem Chip ausgelesenen Merkmalen vergleichen kann. Auch hiermit ist eine Identitätskontrolle ermöglicht.

Wenn die Vorrichtung 100 von der abzulichtenden Person selbst bedient werden kann, so hat sich die Einbindung eines in den Figuren ebenfalls gezeigten Sensors 120 zur Täuschungserkennung bewährt. Dieser Sensor 120 soll gewährleisten, dass Täuschungen beim Identifikationsvorgang maschinell erkannt und unterbunden werden. Vorliegend ist der Sensor 120 beispielhaft als eine Wärmebildkamera 121 gebildet. Dabei nimmt die Wärmebildkamera 121 ein Wärmebild eines Gesichtsbereichs der Person auf, wobei die Auswerte- und/oder Steuereinheit 108 ausgebildet ist, eine örtliche Wärmeinhomogenität in einem vorbestimmten Erfassungsbereich des Wärmebilds zu detektieren. Alternativ oder ergänzend kann der Sensor 120 als eine Nahinfrarot-Kamera (NIR-Kamera) gebildet sein, um die "presentation attack detection" durchzuführen. Anhand eines durch eine NIR-Kamera aufgenommenen NIR-Bildes kann unterschieden werden, ob das Bild eine reale Person darstellt oder lediglich ein auf einem Wiedergabegerät (z.B. einem Smartphone oder einem Tablet) dargestelltes Abbild einer Person zeigt. Denn über das NIR-Bild kann auch die Körperwärme oder die Blutzirkulation ermittelt werden, womit die NIR-Kamera ein hilfreiches Werkzeug für die "presentation attack detection" darstellt.

Zur Erzeugung von zumindest weitestgehend schattenfreien Aufnahmen, ist die gezeigte Rückwand 150 mit einer dem Gehäuse 101 zugewandten Vorderseite 152 gebildet, welche einen Lichtleiter umfasst, der ausgebildet ist, in ihn eingekoppeltes Licht über die Vorderseite 152 der Rückwand 150 auszukoppeln. Es ist zudem ein nicht näher dargestelltes Leuchtelement in Form von einer oder von mehreren LEDs vorhanden, welches mittels der Auswerte- und/oder Steuereinheit 108 ansteuerbar ist. Somit kann die Rückwand 150 beleuchtet werden, um einen schattenfreien Bildhintergrund im Gesichtsbild zu erzeugen. Das von der Rückwand 150 emittierte Licht ist ebenfalls durch punktierte Pfeile illustriert. Alternativ oder ergänzend kann die Rückwand 150 aber ausgebildet sein, um umgeschaltet zu werden zwischen einer Opak-Konfiguration, in welcher ein zumindest aus einem vorgegebenen Spektralbereich stammendes, auf eine Rückseite 151 der Rückwand 152 auftreffendes Licht absorbiert oder von der Rückseite 151 reflektiert wird, und einer Transmissions-Konfiguration, in welcher auf die Rückseite 151 der Rückwand 150 auftreffendes Licht zur Vorderseite 152 der Rückwand 150 transmittiert wird. Durch diese Ausgestaltung ist es beim Einsatz der Anordnung 400 in sicherheitsrelevanten Bereichen möglich, die Rückwand für das menschliche Auge durchsichtig zu schalten, so dass Sicherheitspersonal den sich hinter der Rückwand 150 befindenden Bereich einsehen können, wenn gerade kein Gesichtsbild mittels der Kamera 103 aufgezeichnet wird.

### BEZUGSZEICHENLISTE

- 100: Vorrichtung
- 101: Gehäuse
- 102: Gehäusefront
- 103: Kamera
- 104: Spiegel (optisch)
- 105: Strahlengang
- 106: Spiegel (digital)
- 107: Bedieneinheit
- 108: Auswerte- und/oder Steuereinheit
- 110: Gesicht
- 120: Sensor
- 121: Wärmebildkamera
- 130: Übersichtskamera
- 131: zweiter Strahlengang
- 140: Beleuchtungseinrichtung
- 141: erste Beleuchtungseinheit
- 142: zweite Beleuchtungseinheit
- 143: Beleuchtungselement
- 150: Rückwand
- 151: Rückseite
- 152: Vorderseite
- 201: Abstand
- 202: Abstand
- 400: Anordnung

## Patentansprüche

1. Anordnung (400) umfassend eine Vorrichtung (100) zur Erfassung biometrischer Merkmale eines Gesichts (110) einer Person, mit einem Gehäuse (101), in welchem eine eine erste Brennweite aufweisende Kamera (103) zur Erfassung der biometrischen Merkmale und ein optischer Spiegel (104) zur Faltung eines zwischen dem Gesicht (110) der Person und der Kamera (103) verlaufenden Strahlengangs (105) angeordnet sind, mit einer Auswerte- und/oder Steuereinheit (108), die ausgebildet ist, drahtlos oder drahtgebunden in einer Kommunikationsverbindung mit einem digitalen Spiegel (106) zu stehen, welcher ausgestaltet ist, das von der Kamera (103) erfasste Bild anzuzeigen und welcher vertikal versetzt bezüglich des optischen Spiegels (104) angeordnet ist, sowie mit einer Beleuchtungseinrichtung (140), **dadurch gekennzeichnet, dass** die Beleuchtungseinrichtung (140) eine erste Beleuchtungseinheit (141) und eine zweite Beleuchtungseinheit (142) umfasst, wobei die erste Beleuchtungseinheit (141) und die zweite Beleuchtungseinheit (142), bei der für den bestimmungsgemäßen Gebrauch vorbereiteten Vorrichtung (100), vertikal versetzt bezüglich des optischen Spiegels (104) angeordnet sind, wobei die
erste Beleuchtungseinheit (141) in einer ersten Richtung vertikal versetzt bezüglich des optischen Spiegels (104) angeordnet ist, und wobei die zweite Beleuchtungseinheit (142) in einer von der ersten Richtung abweichenden zweiten Richtung vertikal versetzt bezüglich des optischen Spiegels (104) angeordnet ist,
und dass eine vom Gehäuse (101) räumlich abgesetzte Rückwand (150) vorliegt, die an ihrer dem Gehäuse (101) zugewandten Vorderseite (152) einen Lichtleiter umfasst, welcher ausgebildet ist, in ihn eingekoppeltes Licht über die Vorderseite (152) der Rückwand (150) auszukoppeln, wobei sich das Gesicht (110) der Person, bei der für den bestimmungsgemäßen Gebrauch vorbereiteten Anordnung (400), zwischen dem Gehäuse (101) und der Rückwand (150) befindet.

2. Anordnung (400) nach Anspruch 1, **dadurch gekennzeichnet, dass** die Beleuchtungseinheiten (141, 142) aus mehreren mittels der Auswerte- und/oder Steuereinheit (108) einzeln oder gemeinsam ansteuerbaren Beleuchtungselementen (143) gebildet sind.

3. Anordnung (400) nach Anspruch 1 oder 2, **dadurch gekennzeichnet, dass** die erste Beleuchtungseinheit (141) und/oder die zweite Beleuchtungseinheit (142) geneigt bezüglich des zwischen dem optischen Spiegel (104) und dem Gesicht (105) der Person verlaufenden Strahlengangs (105) ausgerichtet ist.

4. Anordnung (400) nach einem der Ansprüche 1 bis 3, **dadurch gekennzeichnet, dass** ein Sensor (120) zur Täuschungserkennung vorhanden ist.

5. Anordnung (400) nach Anspruch 4, **dadurch gekennzeichnet, dass** der Sensor (120) eine Wärmebildkamera (121) umfasst.

6. Anordnung (400) nach einem der Ansprüche 1 bis 5, **dadurch gekennzeichnet, dass** eine Übersichtskamera (130) mit einer zweiten Brennweite vorgesehen ist, wobei die Länge eines zweiten Strahlengangs (131) zwischen der Übersichtskamera (130) und dem Gesicht (110) der Person kleiner ist als die Länge des Strahlengangs (105) zwischen der Kamera (103) und dem Gesicht (110) der Person.

7. Anordnung (400) nach Anspruch 6, **dadurch gekennzeichnet, dass** der optische Spiegel (104) zumindest teildurchlässig und derart angeordnet ist, dass das durch den optischen Spiegel (104) reflektierte Licht auf die Kamera (103) und das durch den optischen Spiegel (104) transmittierte Licht auf die Übersichtskamera (130) gelenkt ist.

8. Anordnung (400) nach einem der Ansprüche 1 bis 7, **dadurch gekennzeichnet, dass** die Rückwand (150) ausgebildet ist, umgeschaltet zu werden zwischen einer Opak-Konfiguration, in welcher ein zumindest aus einem vorgegebenen Spektralbereich stammendes, auf eine Rückseite (151) der Rückwand (152) auftreffendes Licht absorbiert oder von der Rückseite (151) reflektiert wird, und einer Transmissions-Konfiguration, in welcher auf die Rückseite (151) der Rückwand (150) auftreffendes Licht zu einer Vorderseite (152) der Rückwand (150) transmittiert wird.

## Claims

1. An Arrangement (400) comprising a device (100) for recording biometric features of a persons' face (110), having a housing (101) in which a camera (103) having a first focal length for recording the biometric features and an optical mirror (104) for folding a beam path (105) running between the persons' face (110) and the camera (103) are arranged, with an evaluation and/or control unit (108) which is designed to be in a wireless or wired communication connection with a digital mirror (106) which is designed to display the image captured by the camera (103) and which is arranged vertically offset with respect to the optical mirror (104), and with an illumination device (140), **characterized in that** the illumination device (140) comprises a first illumination unit (141) and a second illumination unit (142), the first illumination unit (141) and the second illumination unit (142), when the arrangement (100) is prepared for its intended use, being vertically offset with respect to the optical mirror (104), wherein the first illumination unit (141) is vertically offset in a first direction with respect to the optical mirror (104), and wherein the second illumination unit (142) is vertically offset in a second direction different from the first direction with respect to the optical mirror (104),
and **in that** a rear wall (150) is present which is spatially offset from the housing (101), which on its front side (152) facing the housing (101) comprises a light guide which is designed to couple out light, which has been coupled into it, via the front side (152) of the rear wall (150), whereas the persons' face (110) being located between the housing (101) and the rear wall (150), when the arrangement (400) is prepared for its intended use.

2. The arrangement (400) according to claim 1, **characterized in that** the illumination units (141, 142) are formed from a plurality of lighting elements (143) which can be actuated individually or jointly by means of the evaluation and/or control unit (108).

3. The arrangement (400) according to claim 1 or 2, **characterized in that** the first illumination unit (141) and/or the second illumination unit (142) is oriented inclined with respect to the beam path (105) extending between the optical mirror (104) and the persons' face (105).

4. The arrangement (400) according to any one of claims 1 to 3, **characterized in that** a sensor (120) for deception detection is present.

5. The arrangement (400) according to claim 4, **characterized in that** the sensor (120) comprises a thermal imaging camera (121).

6. The arrangement (400) according to any one of claims 1 to 5, **characterized in that** an overview camera (130) with a second focal length is provided, wherein the length of a second beam path (131) between the overview camera (130) and the persons' face (110) is smaller than the length of the beam path (105) between the camera (103) and the persons' face (110).

7. The arrangement (400) according to claim 6, **characterized in that** the optical mirror (104) is at least partially permeable and arranged such that the light reflected by the optical mirror (104) is directed to the camera (103) and the light transmitted through the optical mirror (104) is directed to the overview camera (130).

8. The arrangement (400) according to any one of claims 1 to 7, **characterized in that** the rear wall (150) is adapted to be switched between an opaque configuration, in which light originating at least from a predetermined spectral range and impinging on a rear side (151) of the rear wall (152) is absorbed or reflected by the rear side (151), and a transmission configuration, in which light impinging on the rear side (151) of the rear wall (150) is transmitted to a front side (152) of the rear wall (150).

## Revendications

1. Agencement (400) comprenant un dispositif (100) de détection des caractéristiques biométriques d'un visage (110) d'une personne, avec un boîtier (101) dans lequel sont agencés une caméra (103) présentant une première distance focale pour la détection des caractéristiques biométriques et un miroir optique (104) pour la convolution d'un trajet de rayons (105) s'étendant entre le visage (110) de la personne et la caméra (103), avec une unité d'évaluation et/ou de commande (108) qui est conçue pour être en liaison de communication sans fil ou avec fil avec un miroir numérique (106) qui est conçu pour afficher l'image saisie par la caméra (103) et qui est agencé de manière décalée verticalement par rapport au miroir optique (104), ainsi qu'avec un appareil d'éclairage (140), **caractérisé en ce que** l'appareil d'éclairage (140) comprend une première unité d'éclairage (141) et une seconde unité d'éclairage (142), dans lequel la première unité d'éclairage (141) et la seconde unité d'éclairage (142) sont agencées dans le dispositif (100) préparé pour l'utilisation prévue de manière décalée verticalement par rapport au miroir optique (104), dans lequel la première unité d'éclairage (141) est agencée dans une première direction décalée verticalement par rapport au miroir optique (104), et dans lequel la seconde unité d'éclairage (142) est agencée dans une seconde direction différente de la première direction décalée verticalement par rapport au miroir optique (104),
et **en ce qu'**il existe une paroi arrière (150) espacée du boîtier (101), laquelle comprend sur sa face avant (152) tournée vers le boîtier (101) un guide de lumière qui est conçu pour découpler la lumière qui lui est couplée par l'intermédiaire de la face avant (152) de la paroi arrière (150), dans lequel le visage (110) de la personne se trouve, dans l'agencement (400) préparé pour l'utilisation conforme, entre le boîtier (101) et la paroi arrière (150).

2. Agencement (400) selon la revendication 1, **caractérisé en ce que** les unités d'éclairage (141, 142) sont formées à partir de plusieurs éléments d'éclairage (143) pouvant être commandés individuellement ou conjointement au moyen de l'unité d'évaluation et/ou de commande (108).

3. Agencement (400) selon la revendication 1 ou 2, **caractérisé en ce que** la première unité d'éclairage (141) et/ou la seconde unité d'éclairage (142) sont orientées de manière inclinée par rapport au trajet de rayons (105) s'étendant entre le miroir optique (104) et le visage (105) de la personne.

4. Agencement (400) selon l'une quelconque des revendications 1 à 3, **caractérisé en ce qu'**un capteur (120) est présent pour la détection de la tromperie.

5. Agencement (400) selon la revendication 4, **caractérisé en ce que** le capteur (120) comprend une caméra thermique (121).

6. Agencement (400) selon l'une quelconque des revendications 1 à 5, **caractérisé en ce qu'**une caméra d'observation (130) est prévue avec une seconde distance focale, dans lequel la longueur d'un second trajet de rayons (131) entre la caméra d'observation (130) et le visage (110) de la personne est inférieure à la longueur du trajet de rayons (105) entre la caméra (103) et le visage (110) de la personne.

7. Agencement (400) selon la revendication 6, **caractérisé en ce que** le miroir optique (104) est au moins partiellement transparent et est agencé de sorte que la lumière réfléchie par le miroir optique (104) est dirigée vers la caméra (103) et la lumière transmise par le miroir optique (104) est dirigée vers la caméra d'observation (130).

8. Agencement (400) selon l'une quelconque des revendications 1 à 7, **caractérisé en ce que** la paroi arrière (150) est conçue pour être commutée entre une configuration opaque, dans laquelle une lumière provenant d'au moins un domaine spectral prédéterminé et incidente sur une face arrière (151) de la paroi arrière (152) est absorbée ou réfléchie par la face arrière (151), et une configuration de transmission, dans laquelle une lumière incidente sur la face arrière (151) de la paroi arrière (150) est transmise vers une face avant (152) de la paroi arrière (150).
